# EUROPEAN PATENT APPLICATION

(11) **EP 1 634 771 A2**
(43) Date of publication of application: **15.03.2006**
(21) Application number: 05460026.7
(22) Date of filing: 02.09.2005
(51) Int. Cl.: B60Q 1/48

(54) **Protecting device for parked vehicles**

(30) Priority: 14.09.2004 ES 200402113 U
(71) Applicant: Del Rio Robles, David, 28529 Rivas-vaciamadrid Urbaniz. (ES)
(72) Inventor: Del Rio Robles, David, 28529 Rivas-vaciamadrid Urbaniz. (ES)
(74) Representative: Czyz, Zbigniew

(57) **Abstract**

Protecting device for parked vehicles which incorporates proximity sensors (1) suitably and separately arranged in its perimeter e.g. on the bumper extreme points characterized in that the proximity sensors (1) are connected with the commutator (2) which in turn is connected with the vehicle power supply accumulator via the horn (5) and/or main beam headlights (8) and/or the brake lights (9) or other, which produce acoustic signals in the parked car when another vehicle is approximating too closely.

## Description

### Field of invention

This invention refers to a device designed to protect parked vehicles against potential impacts of other vehicles which manoeuvre in its vicinity.

The purpose of this invention is to enable a given car to emit acoustic/optical signals when other vehicle approaches rapidly to the given car e.g. at the parking place causing danger of collision.

The invention helps to prevent erosions and petty deformations resulting mainly from vehicle impacts on the car parked at the car park during manoeuvres of the vehicles which take positions at the front and back of the car.

This invention belongs to the field of car accessories.

### Background of the invention

Often the availability of space at the car parks is limited and the car design does not allow drivers to check their perimeters directly or visually which on many occasions entails that such manoeuvres end up with collisions of the parked car with the vehicle looking for an empty parking space with a consequence of damaging both the vehicle which is manoeuvring and the car which is parked properly.

To avoid this problem devices have been employed which make use of proximity sensors properly established in bumpers. They are able to generate some types of signals to the driver of the car approaching at too great a speed to parked vehicles so that they can avoid a crash.

However this device does not protect this vehicle while it is parked (i.e. in the event of the absence of this car's driver) so that there still is a problem when -as it happens in the vast majority of cases- the vehicle which is trying to park next to the parked one lacks the aforementioned mechanism.

### Detailed description of the invention

The device proposed by this invention fully solves the problem mentioned before. The device is able to fulfil the function of the protecting element both when the car is manoeuvring at the car park (which happens in case of conventional mechanisms installed) and when the car is parked while other vehicles are manoeuvring close to it.

The invention makes use of classical proximity sensors normally situated on the vehicle's bumper which control the functioning of the relay or electronic commutator which in turn controls the supply from the vehicle's accumulator to the transmitter's elements such as e.g. horn/ main beam headlights/ brake etc.

When the vehicle is approximating the other parked vehicle, whose engine is switched off this ensuing proximity is detected by one of the sensors acting on the said relay and triggering off the functioning of selected element/s of the vehicle's alarm.

Signalling can be prolonged in time along with sustained proximity of the other vehicle, which obviously can result in running out of the car accumulator if this other car just parks nearby and its driver leaves for an undetermined time. Therefore it is necessary to install a timer which can be set for 15-20 seconds and turn off by itself.

To prevent acoustic signals at night the device could incorporate a photoelectric cell which could indicate the absence of light. However it is advisable to install an internal clock which can be programmed as to respect the period of time during which the use of horn is prohibited by law. Employment of the said clock solves the problem which appears when the photoelectric cell reacts on the light originating from artificial sources e.g. a street lamp.

In accordance with the other characteristics of the invention, the device can be connected to a pager from the said optical/ acoustic signalling device specifically incorporating into the device a radiofrequency transmitter which is activated equally via the relay controlled by the sensors.

However the device has been designed particularly to protect a vehicle during the manoeuvres at the car park, it is still useful in protecting the said vehicle's doors while being opened, during which the doors can hit adjacent vehicles such as in e.g. parking on the kerb, for which it is necessary to install the complementary proximity sensors situated e.g. on the embellishments and protectors at the doors of the car.

### Description of drawings

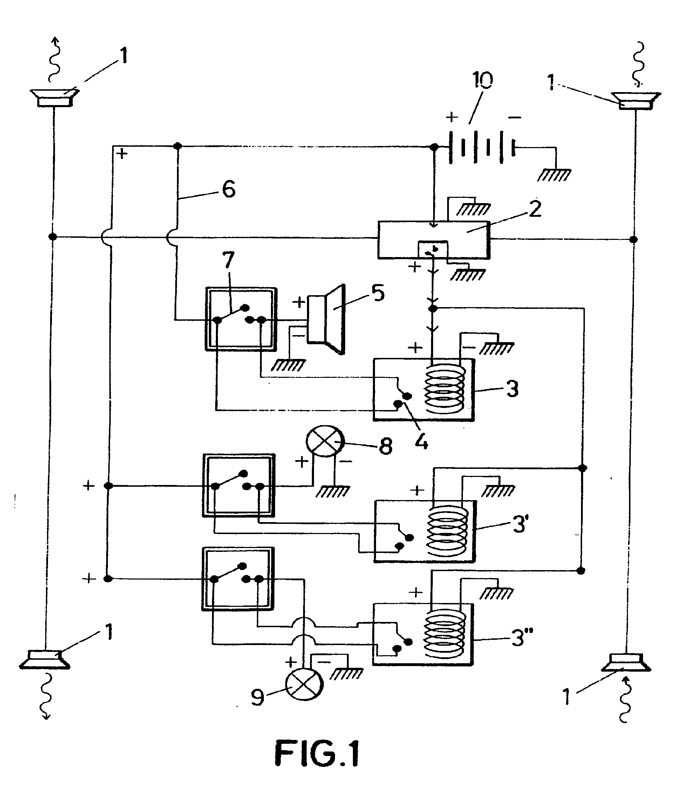

To complete the description and to facilitate understanding of the invention and in accordance with the best example of its practical realisation, the drawing of an electric scheme has been attached.

The drawing shows four ultrasonic sensors (1) of proximity separately installed at the vehicle's bumper e.g. at the car's rear and front bumper extreme points, and according to what has been said previously, the sensors can be installed at the vehicle's sides as well to protect the vehicle's doors.

These four sensors are connected to the electronic commutator (2) which on receiving the signal from at least one of the sensors (1) acts on at least one relay (3) shutting the contacts (4) to supply one of the classic signalling device of the vehicle such as e.g. the horn (5) in whose power circuit (6) there is as well a classic switch (7), that permits its power feed from the vehicle's steering wheel in normal driving conditions.

Three relays (3), (3'), (3'') shown at the drawing are connected in parallel with the electronic commutator (2); the first relay supplies the horn (5), the second - the main beam headlights (8), the third- brake lights (9). The means of signaling and the number of medias acting simultaneously may change.

According to the drawing the signaling device (5-8-9) will work when the vehicle exceeds the pre-established proximity degree e.g. 5 or 6 centimeters. When this situation occurs, one of the sensors (1) will activate the electronic commutator (2) which in turn will activate the signaling device and the action will be interrupted when the distance grows.

It may be possible that the parking vehicle stops five or six centimeters away because there will be little space available or because of other reasons. To prevent the signaling from being active over an indefinite period of time, which can trouble the people nearby and discharge the car accumulator (10) there is a timer which collaborates with the electronic commutator (2) and stops the device after some predetermined time lapse e.g. 15 or 20 seconds.

As it has been said previously the electronic commutator (2) can supply in parallel three relays (3), (3'), (3"), a radiofrequency transmitter linked with a pager, which informs the owner that some abnormal situation has occurred in his car proximity.

In the case of using the horn (5) as a signaling device the mechanism will also have a timer which will stop the relay (3) during night time to respect the periods during which the use of horn is prohibited by law. The timer can be replaced with a photoelectric cell but this would cause functional errors when the vehicle is parked at night close to a source of light which can confuse the system cell.

## Claims

1. Protecting device for parked vehicles which incorporates proximity sensors suitably and separately arranged in its perimeter e.g. on the bumper extreme points **characterized in that** the proximity sensors are connected with the commutator which in turn is connected with the vehicle power supply accumulator via the horn and/or main beam headlights and/or the brake lights or other, which produce acoustic signals in the parked car when another vehicle is approximating too closely.

2. The device according to claim 1, wherein the said electronic commutator collaborates with a timer which cuts power supply of the vehicle to optical/ acoustic signalling device after predetermined time in a situation of permanent proximity of another vehicle within the established security margin.

3. The device according to any of the preceding claims, wherein the electronic commutator acts on for every acoustic/optical signalling via the relay or other.

4. The device according to claim 3, wherein the horn activation relay collaborates with the photoelectric cell or internal clock which stops the relay during the night hours.

5. The device according to any of the preceding claims, wherein the proximity sensors arranged separately on bumpers are accompanied by security sensors on the vehicle doors.

6. The device according to any of the preceding claims, wherein the electronic commutator supplies radiofrequency transmitter connected to a pager.
